# EUROPÄISCHE PATENTSCHRIFT

(11) **EP 1 110 883 B1**
(45) Veröffentlichungstag und Bekanntmachung des Hinweises auf die Patenterteilung: **15.09.2004**
(21) Anmeldenummer: 00128261.5
(22) Anmeldetag: 22.12.2000
(51) Int. Cl.: B65G 47/90, B28B 13/04, B28B 11/00

(54) **Vorrichtung zur Herstellung von Mauertafeln**
Apparatus for erecting a block wall
Dispositif pour fabriquer un mur de blocs

(30) Priorität: 23.12.1999 DE 19962656
(43) Veröffentlichungstag der Anmeldung: 27.06.2001
(73) Patentinhaber: Coserv & Management S.A., Panama 5 (PA)
(72) Erfinder:
(74) Vertreter: Berngruber, Otto, Dr. Dipl.-Chem.

(56) Entgegenhaltungen:
- DE-A- 19 830 985
- DE-B- 2 211 542
- DE-B- 2 333 709
- US-A- 3 790 428

## Beschreibung

Die Erfindung bezieht sich auf eine Vorrichtung zur Herstellung von Mauertafeln.

Eine derartige Vorrichtung ist aus DE 198 30 985 A1 bereits bekannt. Dabei werden die zu vermauernden Steine von einem Greifer auf einer als Endlosförderer gebildeten Aufreihstrecke aufgesetzt, der diese gruppenweise in einer Reihe gegen einen Anschlag fördert. Die Ist-Länge der so auf Stoß zusammengeschobenen Steingruppen wird mit einer am Endlosförderer angeordneten Lichtschranke bestimmt. Die Einrichtung zum Auseinanderbewegen der Steine wird durch die Übergabeeinrichtung gebildet, mit der die jeweilige Steingruppe von der Aufreihstrecke zu der Mauerstation transportiert wird, um dort auf einem Mörtelbett auf der unteren Steinreihe zur Mauertafel aufgemauert zu werden. Die Übergabeeinrichtung ist dazu als Reihengreifer ausgebildet, dessen einzelne Greifer über einzeln angetriebene Zahnritzel entlang einer Zahnstange bewegbar geführt sind.

Die zu vermauernden Steine weisen aufgrund herstellungsbedingter Toleranzen unterschiedliche Längen auf. Die Toleranzabweichungen der Mauersteine können mit einer solchen Vorrichtung durch mehr oder weniger breite senkrechte Stoßfugen ausgeglichen werden. Ferner kann eine unverputzte Ziegelmauer, eine sogenannte Sichtmauer, mit einer optisch ansprechenden Stoßfugenbreite hergestellt werden. Allerdings läßt die Produktionsleistung der bekannten Vorrichtung zu wünschen übrig.

Denn dort werden die Steine zuerst von einem Palettenstapel entnommen, anschließend auf einer Fördereinrichtung abgelegt und in Gruppen gegen Anschlag gefördert. Nach Messung der Länge einer Gruppe von z.B. drei Steinen werden diese dann nochmals gegriffen auf Maß auseinandergezogen und (durch einen in Richtung der Mauer verfahrbaren Greifer) an ihrer Position in der Mauer abgesetzt.

Eine weitere Vorrichtung der eingangs genannten Art ist aus DE2211542A bekannt. In einem Arbeitsschritt werden die zu vermauernden Steine durch Sauggreifer reihenweise von einem Steinpaket aufgenommen, auf Fugenabstand auseinandergezogen und in der Mauerstation abgesetzt. Die bekannte Vorrichtung kann aber nur bei Steinen eingesetzt werden, die sich durch Sauggreifer anheben lassen.

Aufgabe der Erfindung ist es daher, die Einsatzbreite einer solchen Vorrichtung deutlich zu erhöhen.

Dies wird erfindungsgemäß mit der im Anspruch 1 gekennzeichneten Vorrichtung erreicht. In den Unteransprüchen 2 bis 7 sind vorteilhafte Ausgestaltungen der Erfindung wiedergegeben. Der Anspruch 8 ist auf die bevorzugte Verwendung der erfindungsgemäßen Vorrichtung zur Herstellung von Mauertafeln für Sichtmauern gerichtet.

Erfindungsgemäß besitzt der Stapelgreifer Längsgreifer zum Greifen und auf Block zusammenschieben einer Mauersteinreihe eines Mauersteinpakets in Längsrichtung und Quergreifer zum einzelnen Greifen jedes einzelnen Mauersteins einer Mauersteinreihe. Die Quergreifer sind zum Auseinanderbewegen der Mauersteine einer entstapelten, gegriffenen Mauersteinreihe in Längsrichtung des Stapelgreifers verfahrbar ausgebildet.

Dementsprechend kann zunächst die Mauersteinreihe vom Mauersteinpaket durch die Längsgreifer bei auseinandergefahrenen, geöffneten Quergreifern ergriffen werden. In der Luft erfolgt ein Umgreifen. Die Quergreifer packen zu, während die Längsgreifer auseinander gefahren werden. In dieser Griffstellung können die Quergreifer dann in Längsrichtung des Stapelgreifers auseinander bewegt werden, um die Mauersteine entsprechend auszurichten.

In den Entstapelgreifer ist vorzugsweise eine Messeinrichtung zur Vermessung der Ist-Länge der entstapelten Steinreihen und eine Positioniervorrichtung integriert, mit der die von den Quergreifern ergriffenen Steine der Steinreihe auf die Soll-Länge auseinander bewegt werden.

Zweckmäßigerweise erfaßt die Messeinrichtung den Abstand der Längsgreifer, der der Länge der ergriffenen Mauersteinreihe entspricht, während diese vom Entstapelgreifer gegriffen wird.

Vorzugsweise ist ein Stapelgreifer von der Anlieferstation, in der die Mauersteinpakete abgesetzt werden, zu der Aufreihstrecke verfahrbar.

Die Aufreihstrecke wird vorzugsweise durch einen Förderer gebildet, der beispielsweise als Transportband oder dgl. Endlosförderer oder Rollenbahn ausgebildet sein kann.

Alternativ können bei Verarbeitung geeigneter Steine z.B. aus Kalksandstein statt aus Ziegelmaterial, die Quergreifer mit Vakuumsaugern ausgestattet und dann nur einseitig ausgebildet sein.

Nachstehend ist die Erfindung anhand der beigefügten Zeichnung beispielhaft näher erläutert. Darin zeigen
Figur 1 schematisch die Draufsicht auf eine Vorrichtung zur Herstellung von Mauertafeln aus Mauersteinen;
Figur 2 eine vergrößerte Darstellung der Draufsicht nach Figur 1 im Bereich des Steinpakets und der Aufreihstrecke.
Figur 3 eine Seitenansicht des Entstapelgreifers; und
Figur 4 eine um 90 Grad verdrehte Seitenansicht des Entstapelgreifers.

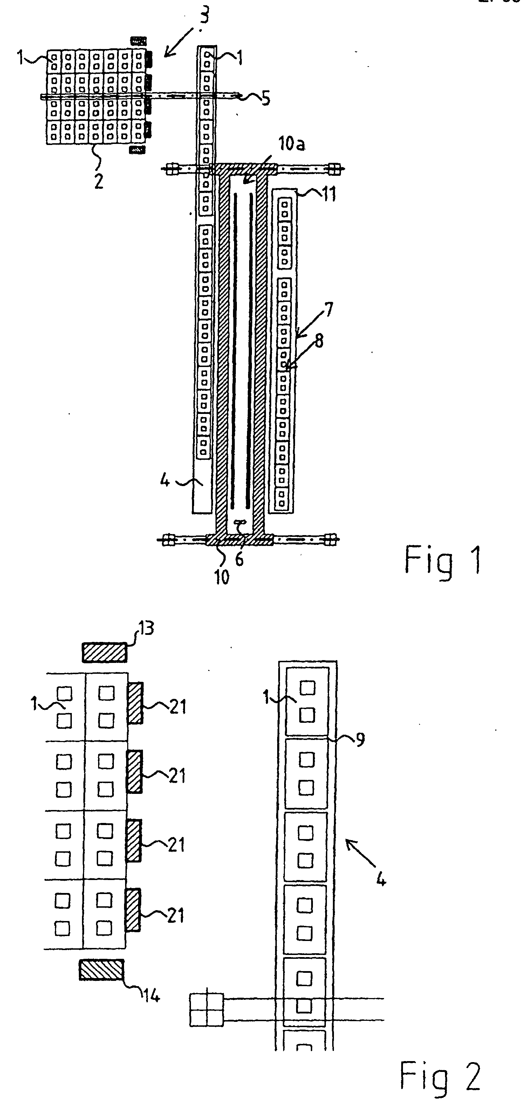

Gemäß Figur 1 werden die zu verarbeitenden Mauersteine 1 in Form palettierter Mauersteinpakete 2 angeliefert. Die Mauersteine 1 des Paketes 2 werden mit einem Entstapelgreifer 3 auf einer Aufreihstrecke 4 abgesetzt. Der Entstapelgreifer 3 ist dazu entlang einer Führung 5 verfahrbar, die sich quer über das eine Ende der Aufreihstrecke 4 erstreckt.

Die Aufreihstrecke 4 ist als Förderband, Rollenbahn oder dgl. Förderer ausgebildet, um die vom Entstapelgreifer 3 abgesetzten zu vermauernden Mauersteine 1 entlang der Aufreihstrecke 4 in einer vorbestimmten Anzahl aufzureihen und zwar in dem Abstand voneinander wie sie von dem Entstapelgreifer 3 abgesetzt werden.

Die auf der Aufreihstrecke 4 aufgereihten Mauersteine 1 werden mit einer in Richtung des Pfeils 6 schematisch dargestellten Übergabeeinrichtung 10 mit dem Greifer 10a zu einer parallel zur Aufreihstrecke 4 angeordneten Mauerstation 7 transportiert, an der eine Mauertafel 8 aufgemauert wird.

Die erste Mauersteinreihe auf der Aufreihstrecke 4 wird dazu auf einer an der Mauerstation 7 vorgesehene Unterlage 11 abgesetzt. Es wird ein Mörtelbett aufgebracht und dann die zweite Mauerreihe von der Aufreihstrecke 4 mit der Übergabeeinrichtung 6 aufgesetzt und sofort, bis die Mauertafel 8 auf die vorbestimmte Höhe gemauert worden ist.

Um eine Sichtmauer zu mauern, sollen die senkrechten Stoßfugen 9 zwischen den Mauersteinen 1 der Mauertafel 8 eine bestimmte Breite besitzen, um einwandfrei vermörtelt werden zu können.

Erfindungsgemäß werden dazu die Mauersteine 1 mit dem Entstapelgreifer 3 von dem Steinpaket 2 reihenweise entstapelt, anschließend mit dem Entstapelgreifer 3 auf die gewünschte Stoßfugenbreite auseinander bewegt und auf den Förderer der Aufreihstrecke 4 so abgelegt, dass sich auch zwischen dem letzten Stein der vorletzten abgelegten entstapelten Steinreihe und dem ersten Stein der zuletzt abgelegten Steinreihe eine Stoßfuge gleicher Breite bildet. Dazu wird die zuletzt abgelegte Steinreihe mit dem Förderer jeweils um das Maß ihrer Länge plus eine Stoßfugenbreite weiterbewegt.

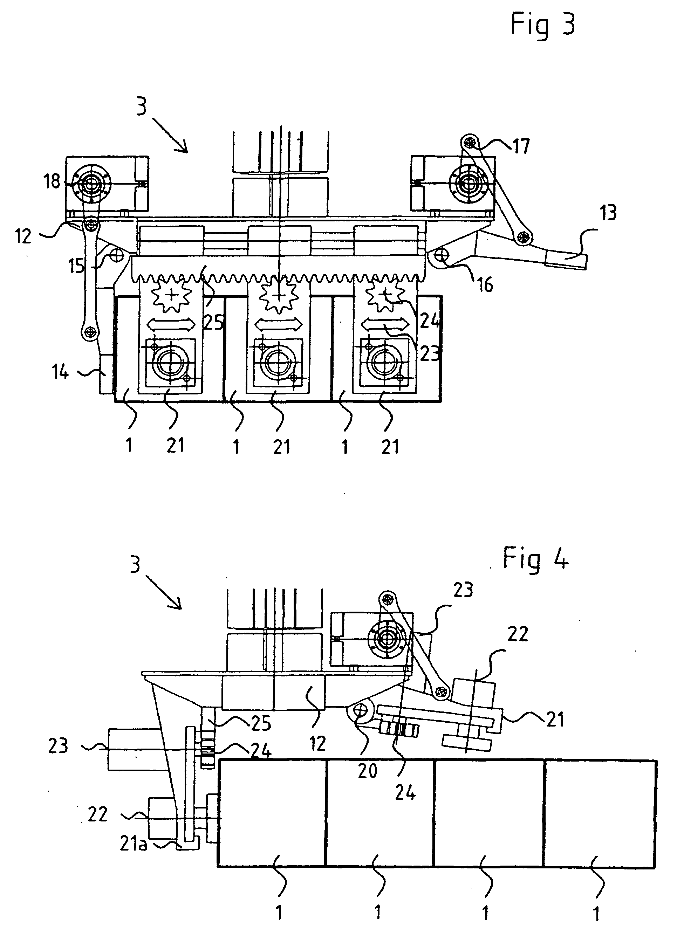

Gemäß Figur 3 weist der Stapelgreifer 3 ein Paar von Greifern 13, 14 auf, welches eine Mauersteinreihe des Mauersteinpaktes 1 greift. Jede Mauersteinreihe kann dazu, wie in Figur 2 dargestellt, aus drei Steinen 1 bestehen oder z. B. vier gemäß Figur 1. Die Längsgreifer 13, 14 sind dazu um eine Achse 15, 16 oberhalb der Steine 1 an dem Träger 12 des Entstapelgreifers 3 angelenkt und werden durch ein Kurbelgetriebe 17, 18 betätigt. Mittels der Längsgreifer 13, 14 wird also von dem Mauersteinpaket 2 eine ganze Mauersteinreihe entnommen, wobei die Mauersteine 1 einer Reihe gegeneinander gedrückt werden.

Zwischen den Längsgreifern 13, 14 sind wie in Figur 4 dargestellt, Paare von Quergreifern 21, 21a vorgesehen. Die Anzahl der Quergreiferpaare 21, 21a ist so groß gewählt, wie die maximale Steinzahl pro Reihe des Steinpaktes 2 ist. Die Quergreiferpaare 21, 21a greifen quer zur Greifrichtung der Längsgreifer 13, 14 eine Seite der Quergreifer 21 sind ebenfalls um die Achse 20 schwenkbar am Träger 12 oberhalb der Steine 1 angelenkt und können nach oben weg geschwenkt werden, sodass sie beim Greifen einer Mauersteinreihe nicht mit den noch nicht entstapelten Steinreihen am Paket kollidieren.

Die Mauersteine 1 einer ganzen Mauersteinreihe des Steinpakets 2 werden mit den Längsgreifern 13, 14 aufgenommen und gegriffen und anschließend vorzugsweise in der Luft mit den Quergreiferpaaren 21, 21a umgriffen. Dabei können entweder alle oder nur einzelne Mauersteine 1 einer Reihe des Mauersteinpakets 2 auf der Aufreihstrecke 4 abgesetzt werden.

Die Quergreiferpaare 21, 21a sind in Längsrichtung, d. h. in Greifrichtung der Längsgreifer 13, 14 verfahrbar und zwar paarweise synchron, sodass die von den Quergreifern 21, 21a gegriffenen Mauersteine auseinandergezogen werden können, sobald die Längsgreifer 13, 14 auseinander geschwenkt worden sind.

Die Verfahrbarkeit der Quergreiferpaare 21, 21a ist durch die Pfeile 23 dargestellt. Die Quergreifer 21, 21a sind dazu jeweils einzeln durch ein Ritzel 24 angetrieben, welches in eine Zahnstange 25 eingreift, die sich in Längsrichtung des Entstapelgreifers 3 erstreckt und am Träger 12 befestigt ist.

Die Lage einer gegriffenen Steinreihe kann zur Mittelachse des Entstapelgreifers 3 verschoben sein. Die tatsächliche Lage kann aus der Messung des Schwenkwinkels der Längsgreifer 13, 14 um die Achsen 15, 16 ermittelt werden. Zum Absetzen der ergriffenen Mauersteine werden die Zielkoordinaten für den Entstapelgreifer 3 entsprechend der gemessenen Abmessung korrigiert. Mit den Quergreifern 21, 21a werden die Steine 1 der vom Entstapelgreifer 3 ergriffenen Steinreihe auseinander bewegt, um die Stoßfugen 9 zwischen den Steinen 1 der Mauertafeln 8 zu bilden. Dazu ist eine Positioniereinrichtung vorgesehen, welche die von den Quergreifern 21, 21a ergriffenen Steine der Steinreihe auf die Soll-Länge bzw. Soll-Breite der Fuge auseinander bewegt, die die betreffende Steinreihe in der Mauertafel 8 einnimmt.

In der alternativen Anwendung des Entstapelgreifers für Mauern mit nicht vermörtelten Stoßfugen, werden die Steinreihen, die vom Paket entstapelt werden, zuerst mit den Längsgreifern zusammengeschoben, vermessen und anschließend mit den Quergreifern auf ein vorbestimmtes Maß wieder auseinandergezogen. Maßabweichungen der verarbeiteten Steine aufgrund von Steintoleranzen werden auf diese Weise in den vertikalen Fugen aufgenommen.

## Patentansprüche

1. Vorrichtung zur Herstellung von Mauertafeln aus Mauersteinen, mit einer Aufreihstrecke, auf der die zu vermauernden Steine mit einem Greifer in einer Reihe abgesetzt werden und einer Einrichtung zum Auseinanderbewegen der Steine zur Bildung senkrechter Stoßfugen zwischen den Steinen der Mauertafel, wobei der Greifer, der die Steine (1) auf der Aufreihstrecke (4) absetzt, durch einen Entstapelgreifer (3) gebildet wird, der mit seinen beiden Längsgreifern (13, 14) die Steine (1) einer Reihe eines Pakets (2) gegeneinander drückt und reihenweise entstapelt und dass der Greifer eine Einrichtung zum Auseinanderbewegen der Steine (1) besitzt, die durch am Entstapelgreifer (3) zwischen den Längsgreifern (13, 14) angeordnete Quergreifer (21, 21a) gebildet wird, die die Steine (1) der mit den Längsgreifern (13, 14) entstapelten Steinreihe einzeln halten.

2. Vorrichtung nach Anspruch 1, **gekennzeichnet durch** eine Steuereinrichtung, welche die Längsgreifer (13, 14) zum Auseinanderbewegen der Steinreihe mit den Quergreifern (21, 21a) auseinander bewegt.

3. Vorrichtung nach Anspruch 1 oder 2, **dadurch gekennzeichnet, dass** zur Vermessung der Ist-Länge der entstapelten Steinreihe eine Messeinrichtung vorgesehen ist, die den Abstand der Längsgreifer (13, 14) voneinander erfasst und den Wert an eine Steuereinrichtung überträgt.

4. Vorrichtung nach einem der vorhergehenden Ansprüche, **gekennzeichnet durch** eine Positioniereinrichtung, welche die von den Quergreifern (21, 21a) ergriffenen Steine der Steinreihe auf die Soll-Länge der Steinreihe auseinander bewegt.

5. Vorrichtung nach einem der vorhergehenden Ansprüche, **dadurch gekennzeichnet, dass** die Aufreihstrecke (4) durch einen Förderer gebildet wird.

6. Vorrichtung nach einem der vorstehenden Ansprüche, **dadurch gekennzeichnet, dass** der Abstand der Quergreifer in Anpassung an verschiedene Steinbreiten verstellbar ist, indem entweder die Halterung der Greiferbacken zueinander verfahrbar sind, oder der Hub der Zylinder entsprechend gross ist.

7. Vorrichtung nach einem der vorhergehenden Ansprüche, **dadurch gekennzeichnet, dass** die Längsgreifer (13, 14) am Träger (12) des Entstapelgreifers (3) verschwenkbar angelenkt sind.

8. Vorrichtung nach einem der vorstehenden Ansprüche, **dadurch gekennzeichnet, daß** die Quergreifer (21, 21a) durch an den Steinen (1) beidseitig angreifende Greiferpaare gebildet werden.

9. Vorrichtung nach einem der Ansprüche 1 bis 7, **dadurch gekennzeichnet, daß** die Quergreifer durch an den Steinen (1) einseitig angreifende Vakuumgreifer gebildet wird.

10. Vorrichtung nach einem der vorstehenden Ansprüche, **dadurch gekennzeichnet, daß** die Steuereinrichtung derart ausgebildet ist, daß das Umgreifen der Steine (1) von den Längsgreifern (13, 14) auf die Quergreifer (21, 21a) und das Auseinanderziehen der Steine (1) mit den Quergreifern (21, 21a) in der Luft während der Bewegung des Greifers vom Stapel (2) zur Aufreihstrecke (4) erfolgt.

11. Vorrichtung nach einem der vorstehenden Ansprüche, **dadurch gekennzeichnet, daß** der Entstapelgreifer (3) die gleiche Anzahl von Quergreifern (21, 21a) besitzt wie die Anzahl der Steine (1) eine Paketreihe beim Verarbeiten der kürzesten Steine.

12. Vorrichtung nach Anspruch 1, **dadurch gekennzeichnet, dass** eine Übergabeeinrichtung, mit der die Steinseile von der Aufreihstrecke zu einer Mauerstation zum Aufmauern der Mauertafel transportiert wird, vorgesehen ist.

13. Vorrichtung nach Anspruch 1, **dadurch gekennzeichnet, dass** die Quergreifer (21, 21a) in Längsrichtung des Entstapelgreifers (3) bewegbar ausgebildet sind.

14. Verwendung der Vorrichtung nach einem der vorhergehenden Ansprüche zur Herstellung von Mauertafeln für ein Sichtmauerwerk.

15. Verwendung der Vorrichtung nach einem der Ansprüche 1 bis 13 zum zusätzlichen Feinausgleich aufgrund von Maßfehlern der Steine (1).

## Claims

1. An apparatus for producing wall panels from bricks, having a line-up path on which bricks to be masoned are deposited in a row with a gripper, and a device for moving apart the bricks to form vertical joints between the bricks of the wall panel, wherein that the gripper depositing the bricks (1) on the line-up path (4) is formed by a depiling gripper (3) that presses the bricks (1) of a row of a pile (2) against each other and depiles them in rows with its two longitudinal grippers (13, 14), and the gripper has a device for moving apart the bricks (1) that is formed by transverse grippers (21, 21a) disposed on the depiling gripper (3) between the longitudinal grippers (13, 14) and individually holding the bricks (1) of the brick row depiled with the longitudinal grippers (13, 14).

2. An apparatus according to claim 1, **characterized by** a control device that moves apart the longitudinal grippers (13, 14) for moving apart the brick row with the transverse grippers (21, 21a).

3. An apparatus according to claim 1 or 2, **characterized in that** for measuring the actual length of the depiled brick row a measuring device is provided that detects the distance between the longitudinal grippers (13, 14) and transfers the value to a control device.

4. An apparatus according to any of the above claims, **characterized by** a positioning device that moves apart the bricks of the brick row gripped by the transverse grippers (21, 21a) to the nominal length of the brick row.

5. An apparatus according to any of the above claims, **characterized in that** the line-up path (4) is formed by a conveyor.

6. An apparatus according to any of the above claims, **characterized in that** the distance between the transverse grippers is adjustable to adapt to different brick widths by either the mountings of the gripper jaws being adapted to travel toward each other, or the stroke of the cylinders being accordingly great.

7. An apparatus according to any of the above claims, **characterized in that** the longitudinal grippers (13, 14) are hinged to swivel on the carrier (12) of the depiling gripper (3).

8. An apparatus according to any of the above claims, **characterized in that** the transverse grippers (21, 21a) are formed by gripper pairs attacking the bricks (1) on both sides.

9. An apparatus according to any of claims 1 to 7, **characterized in that** the transverse grippers are formed by vacuum grippers attacking the bricks (1) on one side.

10. An apparatus according to any of the above claims, **characterized in that** the control device is formed so that the regripping of the bricks (1) from the longitudinal grippers (13, 14) to the transverse grippers (21, 21a) and the pulling apart of the bricks (1) with the transverse grippers (21, 21a) are effected in the air during motion of the gripper from the pile (2) to the line-up path (4).

11. An apparatus according to any of the above claims, **characterized in that** the depiling gripper (3) has the same number of transverse grippers (21, 21a) as the number of bricks (1) of a pile row when processing the shortest bricks.

12. An apparatus according to claim 1, **characterized in that** a transfer device is provided for transporting the brick row from the line-up path to a bricklaying station for masoning the wall panel.

13. An apparatus according to claim 1, **characterized in that** the transverse grippers (21, 21a) are formed to be movable in the longitudinal direction of the depiling gripper (3).

14. Use of the apparatus according to any of the above claims for producing wall panels for fair-faced brickwork.

15. Use of the apparatus according to any of claims 1 to 13 for additional fine adjustment due to measuring errors of the bricks (1).

## Revendications

1. Dispositif de fabrication de panneaux muraux en pierres de taille, comportant un banc d'alignement sur lequel les pierres à maçonner sont déposées sur une rangée par un grappin, et un dispositif pour écarter les pierres les unes des autres pour former des joints montants verticaux entre les pierres des panneaux muraux, le grappin qui dépose les pierres (1) sur le banc d'alignement (4) étant formé par un grappin de dépilage (3) qui presse avec ses deux preneurs longitudinaux (13, 14) les pierres (1) d'une rangée d'un paquet (2) les unes contre les autres et les dépile par rangée, et en ce que le grappin possède un dispositif pour écarter les pierres les unes des autres, qui est formé par des preneurs transversaux (21, 21a) agencés sur le grappin de dépilage (3) entre les preneurs longitudinaux (13, 14), lesquels tiennent les pierres (1) de la rangée de pierres dépilée par les preneurs longitudinaux (13, 14).

2. Dispositif selon la revendication 1, **caractérisé par** un dispositif de commande qui écarte les uns des autres les preneurs longitudinaux (13, 14) pour écarter les unes des autres les pierres de la rangée de pierres au moyen des preneurs transversaux (21, 21a).

3. Dispositif selon la revendication 1 ou 2, **caractérisé en ce que** pour mesurer la longueur réelle de la rangée de pierre dépilée, il est prévu un dispositif de mesure qui détecte la distance entre les preneurs longitudinaux (13, 14) et qui transmet la valeur à un dispositif de commande.

4. Dispositif selon l'une des revendications précédentes, **caractérisé par** un dispositif de positionnement qui écarte les unes des autres les pierres de la rangée de la rangée de pierres saisies par les preneurs transversaux (21, 21a) pour les amener à la longueur de consigne de la rangée de pierres.

5. Dispositif selon l'une des revendications précédentes, **caractérisé en ce que** le banc d'alignement (4) est formé par un convoyeur.

6. Dispositif selon l'une des revendications précédentes, **caractérisé en ce que** l'écartement des preneurs transversaux est réglable pour les adapter à différentes largeurs de pierres, soit par le fait que la fixation des mâchoires de preneurs l'une par rapport à l'autre est mobile soit par le fait que la course du cylindre est d'une grandeur correspondante.

7. Dispositif selon l'une des revendications précédentes, **caractérisé en ce que** les preneurs longitudinaux (13, 14) sont articulés à pivotement sur le support (12) du grappin de dépilage (3).

8. Dispositif selon l'une des revendications précédentes, **caractérisé en ce que** les preneurs transversaux (21, 21a) sont formés par des paires de preneurs s'engageant des deux côtés sur les pierres (1).

9. Dispositif selon l'une des revendications 1 à 7, **caractérisé en ce que** les preneurs transversaux sont formés par des preneurs à ventouse s'engageant d'un côté sur les pierres (1).

10. Dispositif selon l'une des revendications précédentes, **caractérisé en ce que** le dispositif de commande est réalisé de telle sorte que l'enveloppement des pierres (1) depuis les preneurs longitudinaux (13, 14) jusqu'aux preneurs transversaux (21, 21a) et l'écartement des pierres (1) ont lieu en l'air au moyen des preneurs transversaux (21, 21a) pendant le mouvement du grappin depuis la pile (2) vers le banc d'alignement (4).

11. Dispositif selon l'une des revendications précédentes, **caractérisé en ce que** le grappin de dépilage (3) possède le même nombre de preneurs transversaux (21, 21a) que le nombre de pierres (1) d'une rangée de paquets lors du traitement des pierres les plus courtes.

12. Dispositif selon la revendication 1, **caractérisé en ce qu'**il est prévu un système de transbordement par lequel la rangée de pierres est transportée depuis le banc d'alignement vers une station de maçonnage pour dresser le panneau mural.

13. Dispositif selon la revendication 1, **caractérisé en ce que** les preneurs transversaux (21, 21a) sont réalisés mobiles en direction longitudinale du preneur grappin de dépilage (3).

14. Utilisation du dispositif selon l'une des revendications précédentes pour fabriquer des panneaux muraux pour un montage de briques apparentes.

15. Utilisation du dispositif selon l'une des revendications 1 à 13 pour une égalisation précise additionnelle en raison d'erreurs de mesure des pierres (1).
